# EUROPEAN PATENT SPECIFICATION

(11) **EP 1 676 034 B1**
(45) Date of publication and mention of the grant of the patent: **30.05.2007**
(21) Application number: 04775535.0
(22) Date of filing: 12.10.2004
(51) Int. Cl.: F16B 17/00

(54) **SHEAR STRAIN CARRYING JOINT BETWEEN TWO ABUTTING ELEMENTS IN A MOTOR VEHICLE**
SCHERBELASTUNGSAUFNAHMEVERBINDUNG ZWISCHEN ZWEI ANEINANDERSTOSSENDEN ELEMENTEN IN EINEM KRAFTFAHRZEUG
JOINT SUPPORTANT UNE DEFORMATION DE CISAILLEMENT ENTRE DEUX ELEMENTS S'ABOUTANT

(30) Priority: 15.10.2003 SE 0302741
(43) Date of publication of application: 05.07.2006
(73) Proprietor: VOLVO LASTVAGNAR AB, 405 08 Göteborg (SE)
(72) Inventor: SVENSSON, Roland, S-430 22 Väröbacka (SE); BODIN, Jan-Olof, S-441 65 Alingsas (SE)
(74) Representative: Fröhling, Werner Otto
(86) International application number: PCT/SE2004/001454
(87) International publication number: WO 2005/038274

(56) References cited:
- DE-C- 809 732
- DE-U1- 20 206 627
- US-A- 4 344 717

## Description

### BACKGROUND OF THE INVENTION

The present invention relates to a shear strain-carrying joint according to the preamble of claim 1 below (US 4 344 717 A).

### DESCRIPTION OF THE PRIOR ART

Arranging pins that project from an abutting surface in the first part and are inserted into corresponding openings in a surface of the second part in order to carry shear strains between two mechanical parts is already known in the art. These pins also serve as locating pins in order to ensure a correct positioning of the parts in relation to one another. The desire to avoid movements in the joint and hence damaging peak strains and a loose fit has in turn meant problems in assembling the joint owing to the so-called drawer effect, which has meant that great forces are required in order to press the parts together during assembly.

### SUMMARY OF THE INVENTION

The object of the invention is to produce a joint in which relatively large tolerance variations can be accommodated whilst obtaining a firm joint without harmful movements of the parts relative to one another.

### BRIEF DESCRIPTION OF THE DRAWINGS

The invention will be described in more detail below on the basis of some exemplary embodiments and with reference to drawings attached, in which
- Fig. 1: is a partially broken schematic plan view of a joint according to the invention in a first example having two locating pins,
- Fig. 2: is a partially broken and partially sectional exploded view of the joint according to the first example,
- Fig. 3: is a view corresponding to Fig. 2, but with the joint in an assembled state,
- Fig. 4: is a section along the line IV-IV in Fig. 3,
- Fig. 5: is a view, corresponding to Fig. 1, of a shear joint according to a second example having three locating pins,
- Figs 6, 7 and 8: are different views of one of the locating pins forming part of the joint, whilst
- Fig. 9: is an alternative embodiment of a locating pin,
- Figs 10 and 11: are a top view and a side view respectively of the joint forming part of a wheel axle for a motor vehicle.

### DETAILED DESCRIPTION OF THE PREFERRED EMBODIMENTS

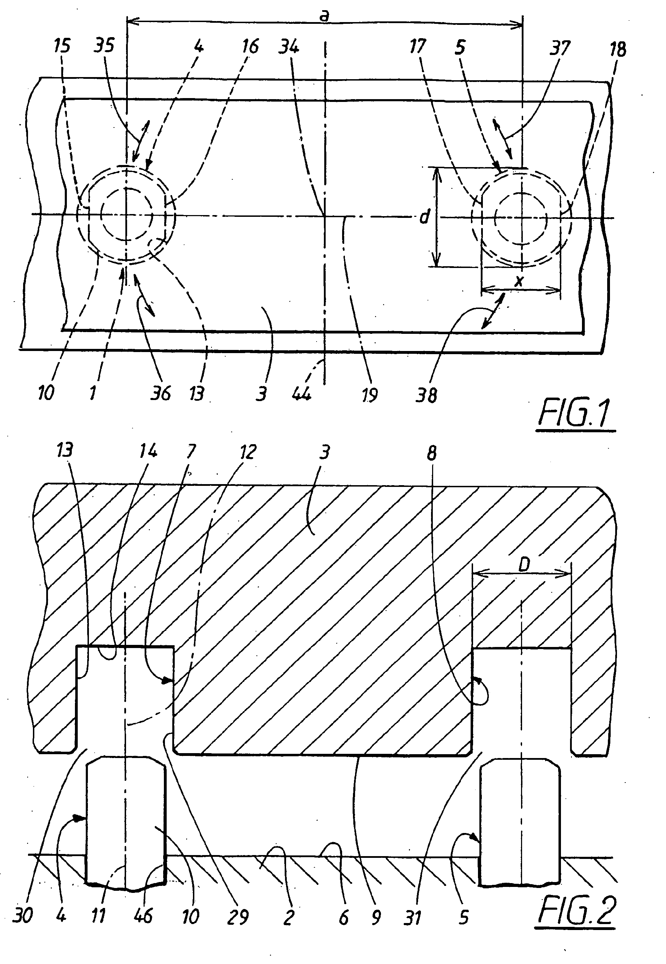

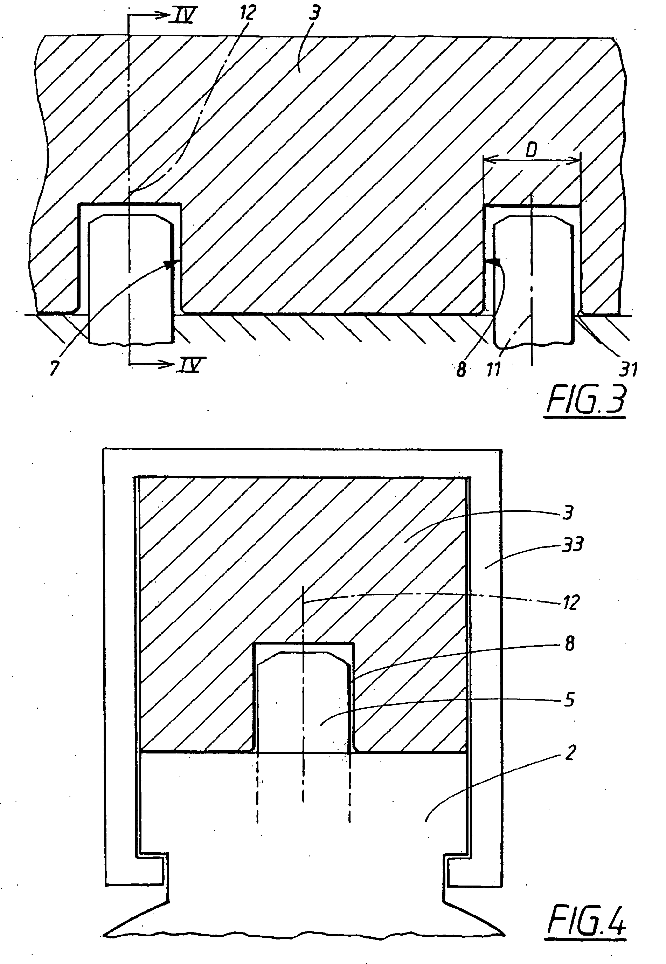

The joint according to the invention is a shear strain-carrying joint 1 between two parts 2, 3, which are to be rigidly secured, that is to say without movements relative to one another. The one part 2 is a part of a wheel axle, for example, such as a rear axle for a motor vehicle, whilst the second part 3, for example, is fixed to a spring assembly, which is part of the wheel suspension for a chassis of a motor vehicle. The construction of the joint will first be described in an example with reference to Figs 1-4. Forming the main parts of the joint are pins, which for the sake of simplicity will henceforth be referred to as locating pins 4, 5, of which there are two in the first example and which project upwards from an abutting surface 6, which may be a plane surface, in the one part. The locating pins are intended for insertion in the second part of the joint, more specifically in a number corresponding to the number of openings 7, 8 in the second part, which in the first example consist of two openings in an abutting surface 9, which in the example shown is a plane surface, the parts in the assembled state being intended to abut one another, see Figs 3 and 4. The main function of the locating pins is to carry shear strains through interaction with the openings. In the example shown, the locating pins 4, 5 are in the main essentially cylindrical in shape, that is to say with a cylindrical lateral surface 10 over a part of their circumference. The locating pins extend with their axis of symmetry 11 at right angles to the abutting surface. The openings 7, 8 are correspondingly cylindrical and extend with an axis of symmetry 12 at right angles to the abutting surface of the second part 3. In the example shown, the openings are provided with a concave, simply curved surface, in the example shown a cylindrical lateral surface 13, which has an extent in the direction of the axis of symmetry 12 which is equal to or somewhat greater than the cylindrical lateral surface 10 of the locating pins in the corresponding direction, that is to say in the direction of the axis of symmetry 11. For the rest, the bottom face 14 of the openings may be formed with any shape so that contact does not occur in the assembled joint. For example, the bottom surface 14 may be entirely plane or may be of a shape similar to the top surface of the locating pins 4, 5.

The two locating pins are situated at a selected interval a from one another, whilst the openings are situated at an equal interval a with a selected maximum tolerance deviation. The locating pins furthermore have a selected diameter d whilst the openings have a selected diameter D, which deviates somewhat by a predetermined amount from the diameter of the locating pins within the scope of the selected tolerance deviations of both the locating pins and the openings.

In order to permit relatively large tolerance deviations in respect of the interval a whilst minimizing the tolerances for the diameter d of the locating pins and the diameter D of the openings, according to the invention, the locating pins are provided with sections 15-18 of the lateral surface where the pin has a reduced cross-sectional dimension x. More specifically, the sections give a reduced, suitably equal distance to the axis of symmetry 11, which in the example is half the value of the cross-sectional dimension x. In the example shown, this is achieved in that the sections 15-18 consist of beveled sections or bevels, which need not necessarily mean that these are formed by machining, such as milling, it being possible to form them from the outset during production of the locating pins. For the sake of simplicity, these will hereafter be referred to as bevels. As shown in the example, these are plane surfaces which in the example extend at a uniform, constant distance from the axis of symmetry 12 over the entire height of the locating pins or a part of the height that is intended for insertion into the openings 7, 8 in the part 3.

As is best seen from Fig. 1, the bevels 15-18 are aligned so that in the example they are symmetrical in relation to a common axis of symmetry 19, that is to say in each locating pin the two bevels 15, 16 and 17, 18 are situated diametrically opposite one another and averted from one another and so oriented that two of the bevels 15, 18 face outwards, away from one another, whilst the other two bevels 16, 17 face one another. In the example shown, all bevels extend in planes parallel to one another. In the example, it is furthermore assumed that the two locating pins 4, 5 are identical in shape and dimensions, which is in itself not essential.

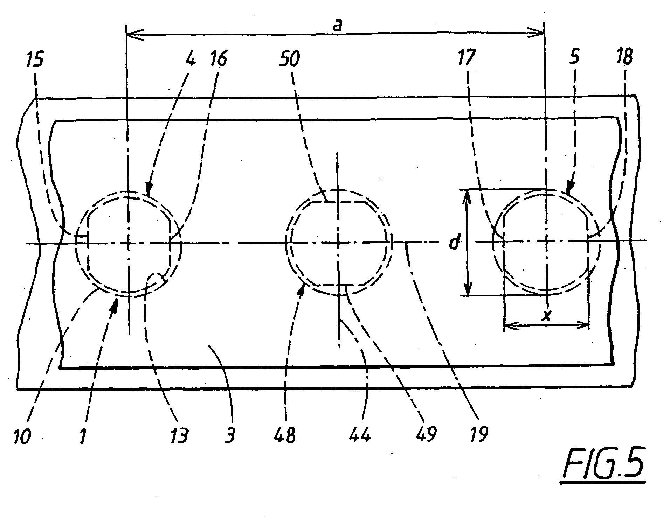

Fig. 5 shows a second example of the shear joint according to the invention in which there are three locating pins, the two outer locating pins 4, 5 in the example possibly being identical to the locating pins according to Fig. 1 and each being inserted in the same way into an opening and beveled in the same way, whilst a third locating pin 48 is arranged and is inserted into a corresponding opening in the second part 3. In the example shown, the third locating pin lies on the same axis of symmetry 19 as the other two locating pins and at the same distance from each of the two outer locating pins, that is to say centrally in relation to the transverse axis of symmetry 44 of the joint. This is in no way essential, however, it being possible for the third locating pin to lie outside the axis of symmetry 19, although it is still advantageously equidistant from the two outer locating pins, that is to say it is located along the transverse axis of symmetry 44. The three locating pins thereby form the angles of an isosceles triangle. In the example shown, the bevels 49, 50 of the third locating pin 48 are furthermore positioned at right angles to the bevels 15-18 of the other two locating pins, that is to say the central locating pin 48 is angularly offset by 90° in relation to the two outer locating pins. The embodiment according to Fig. 5 affords the same advantages as in the first embodiment, whilst also carrying greater shear forces, since the total shear strain-carrying surface is increased for the same dimensions.

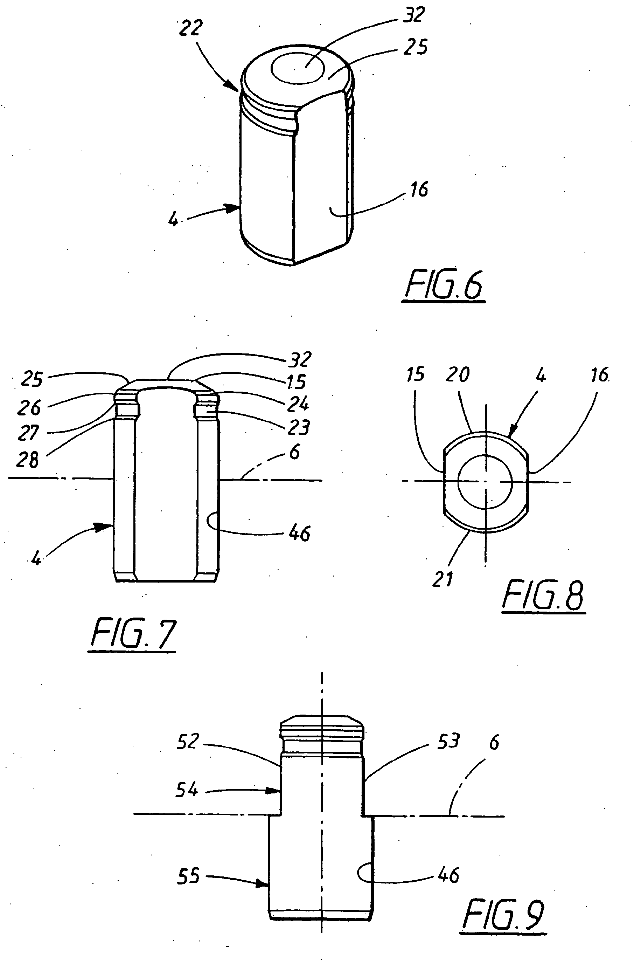

Fig. 6, 7 and 8 shows more clearly an example of the detailed design of a locating pin 4. It will be seen from these that the two bevels 15, 16 thus divide the lateral surface into paired opposing sections, not only the bevels 15, 16 but also the two convexly curved, in the example shown cylindrically curved sections 20, 21 of the lateral surface, which form the so-called mating surfaces in the joint and extend over the greater part of the height of the locating pin. In the example shown, the locating pin 4 has a entering arrangement 22 directly adjoining the top surface of the locating pin, in the main consisting of a neck section 23, that is to say a suitably cylindrical section having a somewhat smaller diameter than the remaining diameter d of the locating pin, and a main section 24, which in the example shown has the same diameter d as the mating surfaces 20-21 of the locating pin, although it may be somewhat smaller. Also to be encountered are conically beveled or rounded surfaces 25, 26, 27, 28, which form guide and entering surfaces in order to prevent catching against a circular aperture edge 29 of the openings around the aperture 30 of the openings. The aperture edges can also advantageously be provided with conical bevels 31. Instead of conical bevels, the surfaces may also be rounded. Thus, in the example, the top surface is divided up into the conical bevel 25 and a plane end surface 32. The top surface may alternatively be entirely conical or convexly domed. However, the top surface should not carry transverse loads in the longitudinal direction of the axis of symmetry 12 originating from the part 3, forces acting on the first part 2 should instead be carried by the two abutting surfaces 6, 9.

In the example, the effective length of the locating pin is shorter than its overall length, since it is intended for anchoring in a bore 46 in the one part 2 and is suitably secured by press-fitting. For example, the pin may project upwards by approximately half its total length, see the horizontal dot-and-dash line 6 in Fig. 7

As is indicated in Fig. 4, the joint 1 according to the invention is supplemented by, for example, one or two fastening members 33 in the form of clamps that enclose the one part 3 and are secured to the second part. This serves to absorb any forces that strive to separate the two parts 2, 3 from one another in a transverse direction to the extent of the abutting surfaces 6, 9, that is to say in the direction of the axis of symmetry 12.

Fig. 9 shows an alternative embodiment of a locating pin 4, which has bevels 52, 53 that extend only over the part 54 of the pin projecting upwards, whilst the part 55 in the bore 46 may be entirely cylindrical.

It will be appreciated from Figs 1-5 that assembly, that is bringing the two parts 2, 3 together, can be done without having to overcome large forces, since the bevels of the locating pins, by virtue of their orientation, will tolerate deviations in the direction of the connecting line 19, that is to say deviations from a specific spacing interval a. The larger the bevels, the greater the tolerance obtained, whilst the absorption of shear strain is reduced by a certain radius of curvature. The shear strain is carried entirely by the two cylindrical lateral surfaces 20, 21 of the locating pins bearing against the lateral surface 13 of the openings 7, 8. In many assemblies the shear strain occurs due to reciprocal lateral forces acting transversely to the connecting line 19 in the plane of projection according to Fig. 1. These lateral forces often occur due to torque that occurs, for example on the second part 3 around the center of rotation 34 of the joint, usually the mid-point between the locating pins and the openings, see force arrows 35, 36, 37, 38. It will be appreciated here that the absence of cylindrical sections in the locating pins has less significance in terms of the ability to carry shear strain than the lateral surface sections 20, 21, which face the direction of the force. The absence of the lateral surface section for a certain diameter can be compensated for by the choice of locating pins and openings having a larger diameter, so that the effective shear strain-carrying surface is retained. Examples of the design dimensions of bevels include reducing the transverse dimension by 5-40%, for example 10%, that is to say the dimension x is 90% of the diameter d.

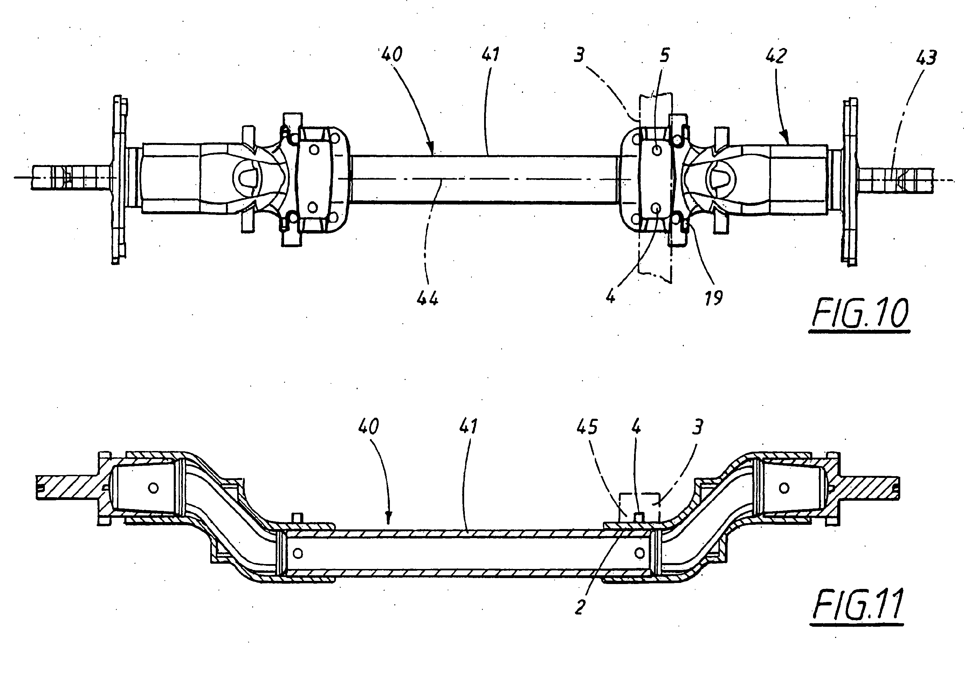

Figs 10 and 11 show an applied example of the joint 1 according to the invention, that is on a motor vehicle, more specifically its rear axle 40, which in the example is of the rigid axle type. The rear axle is divided up into a cylindrical, central tube 41, which at its two ends is connected to axle sections 42, which are purposely designed to carry a wheel (not shown) at the ends 43 of the wheel axle. In the example shown, the axle sections 43 are bent in an S-shape in order to satisfy requirements relating to clearance and center of gravity etc. The axle sections 42 are usually made of a cast or forged material, whilst the center tube 41 may be made from a continuously manufactured sheet steel tube. The axle sections 42 are designed to be provided with one part of the joint, that is to say the locating pins 4, 5, whilst a spring holder, which is indicated by the dot-and-dash line 45, is provided with the second part 3 of the joint, that is to say the openings 7, 8, or vice versa. In the example, the joint is so aligned that the locating pins and the openings are arranged in the longitudinal direction of the vehicle, that is to say that the connecting line 19 extend in the longitudinal direction of the vehicle, which is transversely to the axis of symmetry 44 of the vehicle. The two parts are held together by means of clamps of the type shown in schematic form in Fig. 4, whilst it will be appreciated that the joint between the two parts 2, 3, that is to say the axle section 42 and the spring holder 45, are exposed to large shear forces, which for the most part are dynamic forces and may have high peak values, the greatest forces being directed in a way explained with reference to Fig. 1, that is to say torsional forces in the horizontal plane and also purely linear lateral forces in the horizontal plane in the longitudinal direction of the wheel axle.

The invention is not limited to the exemplary embodiments described above and shown in the drawings but may be modified without departing from the scope of the following claims. The joint is therefore designed as at least two locating pins and corresponding openings, so that there may be more than two or three, for example four, five or six locating pins in the one part and a corresponding number of openings in the other part. In principle, the locating pins and corresponding openings may feasibly have some shape other than a basic cylindrical shape, for example a conical or combined cylindrical and conical shape. The bevels may also feasibly be convexly curved surfaces rather than plane surfaces. However, the bends must have a larger radius of curvature that the mating surfaces, that is to say entailing a reduction in the cross-sectional dimension. The abutting surfaces 6, 9 may feasibly be surfaces other than plane surfaces, but must be complementary in such a way that they result in abutment with one another over at least a part of the surfaces facing one another. Not only can the openings and locating pins change places, so that the first lower part is provided with openings, this facility may also be combined so that one locating pin is fixed in the one part and the next locating pin in the second part. The shear strain-carrying joint may furthermore be intended for carrying shear strains between two other parts in a motor vehicle where dynamic forces occur, for example in the engine, such as an internal combustion engine, or in the transmission.

## Claims

1. A shear strain-carrying joint (1) comprising two parts (2, 3) abutting one another in a motor vehicle, the joint further, comprising at least two pins (4, 5) securely fixed in the one part (3) projecting upwards from an abutting surface (9) and situated at a selected interval (a) from one another, and a corresponding number of openings (7, 8) in an abutting surface (6) on the second part and situated at corresponding interval from one another, the pins being dimensioned, shaped and positioned so that they each fit in one of the openings, **characterized in that** the pins (4, 5), at least in a base section projecting upwards from the abutting surface (9), have two convexly curved mating surfaces (20, 21) which give each pin a selected cross-sectional dimension (d) between the mating surfaces and which are designed, when the parts are in the assembled state, to coincide with sections of the peripheral surface (29) of the openings, and that between the curved mating surfaces (20, 21) of the pins sections (15, 16) are arranged, in which each pin has a smaller cross-sectional dimension (x) than the cross-sectional dimension between the mating surfaces.

2. The shear strain-carrying joint as claimed in claim 1, **characterized in that** the sections (15, 16) between the mating surfaces (20, 21) consist of plane bevels.

3. The shear strain-carrying joint as claimed in claim 2, **characterized in that** the bevels (15, 16) reduce the cross-sectional dimension by 5-40% of the cross-sectional dimension (d) at the mating surfaces (20, 21).

4. The shear strain-carrying joint as claimed in claim 3, **characterized in that** the reduction is approximately 10%.

5. The shear strain-carrying joint as claimed in claim 3, **characterized in that** the reduction is approximately 20%.

6. The shear strain-carrying joint as claimed in any one of the preceding claims, **characterized in that** each pin (4, 5) has an entering arrangement (22) above the base section.

7. The shear strain-carrying joint as claimed in claim 6, **characterized in that** the entering arrangement (22) has beveled and/or narrowing surfaces (23-27) or sections.

8. The shear strain-carrying joint as claimed in any one of claims 3 to 7, **characterized in that** the bevels (15, 16) extend at least over the projecting height of the pins (4, 5).

9. The shear strain-carrying joint as claimed in any one of the preceding claims, **characterized in that** the one part (2) comprises a section of a wheel axle (40) and that the second part (3) comprises a part of a spring holder.

10. The shear strain-carrying joint as claimed in any one of the preceding claims, **characterized in that** the parts (2, 3) are held against one another by means of a fastening device (33).

## Patentansprüche

1. Scherbeanspruchungstragende Verbindung (1) mit zwei Teilen (2, 3) die in einem Kraftfahrzeug aneinander anliegen, wobei die Verbindung außerdem wenigstens zwei Stifte (4, 5), die in dem einen Teil (3) von einer Anlagefläche (9) vorstehend befestigt sind und in einem gewählten Intervall (a) voneinander liegen, und eine entsprechende Anzahl von Öffnungen (7, 8) in einer Anlagefläche (6) an dem zweiten Teil umfasst, die in einem entsprechenden Intervall zueinander liegen, wobei die Stifte so dimensioniert, geformt und angeordnet sind, dass sie jeweils in eine der Öffnungen passen, **dadurch gekennzeichnet, dass** die Stifte (4, 5) wenigstens in einem von der Anlagefläche (9) nach oben vorstehenden Basisabschnitt zwei konvex gekrümmte Passflächen (20, 21) aufweisen, die jedem Stift eine gewählte Querschnittsdimension (d) zwischen den Passflächen geben und so ausgelegt sind, dass, wenn die Teile sich in dem montierten Zustand befinden, sie mit Abschnitten der Umfangsfläche (29) der Öffnungen übereinstimmen, und dass zwischen den gekrümmten Passflächen (20, 21) der Stifte Abschnitte (15, 16) angeordnet sind, an denen jeder Stift eine geringere Querschnittsdimension (x) hat als die Querschnittsdimension zwischen den Passflächen.

2. Scherbeanspruchungstragende Verbindung nach Anspruch 1, **dadurch gekennzeichnet, dass** die Abschnitte (15, 16) zwischen den Passflächen (20, 21) aus ebenen Abschrägungen bestehen.

3. Scherbeanspruchungstragende Verbindung nach Anspruch 2, **dadurch gekennzeichnet, dass** die Abschrägungen (15, 16) die Querschnittsdimension um 5 - 40% der Querschnittsdimension (d) an den Passflächen (20, 21) verringern.

4. Scherbeanspruchungstragende Verbindung nach Anspruch 3, **dadurch gekennzeichnet, dass** die Verringerung ungefähr 10% beträgt.

5. Scherbeanspruchungstragende Verbindung nach Anspruch 3, **dadurch gekennzeichnet, dass** die Verringerung ungefähr 20% beträgt.

6. Scherbeanspruchungstragende Verbindung nach einem der vorhergehenden Ansprüche, **dadurch gekennzeichnet, dass** jeder Stift (4, 5) eine Eintrittsanordnung (22) über dem Basisabschnitt aufweist.

7. Scherbeanspruchungstragende Verbindung nach Anspruch 6, **dadurch gekennzeichnet, dass** die Eintrittsanordnung (22) abgeschrägte und/oder sich verengende Flächen (23 - 27) oder Abschnitte aufweist.

8. Scherbeanspruchungstragende Verbindung nach einem der Ansprüche 3 bis 7, **dadurch gekennzeichnet, dass** die Abschrägungen (15, 16) sich wenigstens über die vorstehende Höhe der Stifte (4, 5) erstrecken.

9. Scherbeanspruchungstragende Verbindung nach einem der vorhergehenden Ansprüche, **dadurch gekennzeichnet, dass** der eine Teil (2) einen Abschnitt einer Radachse (40) umfasst und der zweite Teil (3) einen Teil einer Federhalterung umfasst.

10. Scherbeanspruchungstragende Verbindung nach einem der vorhergehenden Ansprüche, **dadurch gekennzeichnet, dass** die Teile (2, 3) mittels einer Befestigungsvorrichtung (33) gegeneinander gehalten werden.

## Revendications

1. Joint supportant une déformation de cisaillement (1), comportant deux parties (2, 3) venant en butée l'une contre l'autre dans un véhicule à moteur, le joint comportant en outre au moins deux broches (4, 5) fixées de manière sûre dans la première partie (3) faisant saillie vers le haut à partir d'une surface de butée (9), et situées à un intervalle sélectionné (a) l'une de l'autre, et un nombre correspondant d'ouvertures (7, 8) dans une surface de butée (6) sur la seconde partie, et situées à un intervalle correspondant l'une de l'autre, les broches étant dimensionnées, mises en forme et positionnées de sorte qu'elles s'agencent chacune dans une des ouvertures, **caractérisé en ce que** les broches (4, 5), au moins dans un tronçon de base faisant saillie vers le haut à partir de la surface de butée (9), ont deux surfaces d'appariement incurvées de manière convexe (20, 21) donnant à chaque broche une dimension de coupe transversale sélectionnée (d) entre les surfaces d'appariement, et qui sont conçues, lorsque les parties sont dans l'état assemblé, pour coïncider avec des tronçons de la surface périphérique (29) des ouvertures, et **en ce qu'**elles sont agencées entre les surfaces d'appariement incurvées (20, 21) des tronçons de broche (15, 16), chaque broche ayant une dimension de coupe transversale (x) plus petite que la dimension de coupe transversale entre les surfaces d'appariement.

2. Joint supportant une déformation de cisaillement selon la revendication 1, **caractérisé en ce que** les tronçons (15, 16) entre les surfaces d'appariement (20, 21) sont constitués de biseaux plans.

3. Joint supportant une déformation de cisaillement selon la revendication 2, **caractérisé en ce que** les biseaux (15, 16) réduisent la dimension de coupe transversale de 5 à 40 % de la dimension de coupe transversale (d) au niveau des surfaces d'appariement (20, 21).

4. Joint supportant une déformation de cisaillement selon la revendication 3, **caractérisé en ce que** la réduction est d'approximativement 10 %.

5. Joint supportant une déformation de cisaillement selon la revendication 3, **caractérisé en ce que** la réduction est d'approximativement 20%.

6. Joint supportant une déformation de cisaillement selon l'une quelconque des revendications précédentes, **caractérisé en ce que** chaque broche (4, 5) a un agencement entrant (22) au-dessus du tronçon de base.

7. Joint supportant une déformation de cisaillement selon la revendication 6, **caractérisé en ce que** l'agencement entrant (22) a des surfaces (23 à 27) ou tronçons biseauté(e)s et/ou qui rétrécissent.

8. Joint supportant une déformation de cisaillement selon l'une quelconque des revendications 3 à 7, **caractérisé en ce que** les biseaux (15, 16) s'étendent au moins au-delà de la hauteur de saillie des broches (4, 5).

9. Joint supportant une déformation de cisaillement selon l'une quelconque des revendications précédentes, **caractérisé en ce que** la première partie (2) comporte un tronçon d'un essieu de roue (40), et **en ce que** la seconde partie (3) comporte une partie d'un porte-ressort.

10. Joint supportant une déformation de cisaillement selon l'une quelconque des revendications précédentes, **caractérisé en ce que** les parties (2, 3) sont maintenues l'une contre l'autre par l'intermédiaire d'un dispositif de fixation (33).
